(19) Europäisches Patentamt
European Patent Office
Office européen des brevets

(11) Veröffentlichungsnummer: **0 217 783 B1**

# EUROPÄISCHE PATENTSCHRIFT

(45) Veröffentlichungstag der Patentschrift: **27.12.91**

(51) Int. Cl.⁵: **G01N  29/00**

(21) Anmeldenummer: **86890257.8**

(22) Anmeldetag: **15.09.86**

(54) Verfahren zur Bestimmung der Art von punktförmigen und längserstreckten Einzelfehlern in Werkstücken mittels Ultraschall.

(30) Priorität: **03.10.85 AT 2866/85**

(43) Veröffentlichungstag der Anmeldung:
**08.04.87 Patentblatt  87/15**

(45) Bekanntmachung des Hinweises auf die
Patenterteilung:
**27.12.91 Patentblatt  91/52**

(84) Benannte Vertragsstaaten:
**AT DE FR**

(56) Entgegenhaltungen:
**DE-A- 2 828 376**
**DE-C- 3 236 017**
**US-A- 4 531 409**

**JOURNAL OF APPLIED PHYSICS Band 55, Nr.
1, Januar 1984, Seite 162-168, U.S.A.; D.K.
HSU et al.: "Reconstruction of inclusions in
solids using ultrasonic Born inversion"**

**MATERIAL EVALUATION Band 42, Nr. 4, April
1984, Seiten 433-438, 443, U.S.A.; J. ROSE et
al.: Employing a Multidimensional Feature-
based Decision Process"**

(73) Patentinhaber: **VOEST-ALPINE STAHL LINZ
Gesellschaft m.b.H.
Turmstrasse 45
A-4020 Linz(AT)**

(72) Erfinder: **Ganglbauer, Otto
Uppsalaweg 12
A-4040 Linz(AT)**
Erfinder: **Ausserwöger, Josef
Grossamberg 22
A-4040 Linz(AT)**
Erfinder: **Wallner, Felix, Dipl. Ing. Dr.
Roseggerstrasse 75
A-4020 Linz(AT)**

(74) Vertreter: **Haffner, Thomas M., Dr. et al
Patentanwaltskanzlei Dipl.-Ing. Adolf
Kretschmer Dr. Thomas M. Haffner Schottengasse 3a
A-1014 Wien(AT)**

## Beschreibung

Die Erfindung betrifft ein Verfahren zur Bestimmung der Fehlerarten in Werkstücken, insbesondere an und in Schweißnähten von ebenen oder gekrümmten plattenförmigen Bauteilen mit bekanntem Wanddickenverlauf, mittels Ultraschall, bei dem eine systematische Untersuchung des Werkstücks bzw. seiner, gegebenenfalls durch manuelle oder mechanisierte Vorprüfung voruntersuchten, Fehlererwartungsbereiche nach dem Ultraschall-Echobildverfahren in einzelnen Querschnittebenen zur Erzeugung eines Querschnitts- oder B-Bildes vorgenommen wird, wobei die Position der Ultraschallwandleranordnung auf dem Werkstück und bzw. oder die Einschallrichtung verändert werden und wobei für die Fehlerortung die Laufzeiten der Reflexionen berechnet werden.

Für die zerstörungsfreie Prüfung von Werkstoffen, Halbfabrikaten und fertigen Bauteilen werden seit langem Ultraschallverfahren angewendet. Beim Ultraschall-Echobildverfahren mit Darstellung des Ergebnisses auf dem Leuchtschirm einer Elektronenstrahlröhre hat man die Wahl zwischen der Erzeugung eines A-Bildes (Linear-Verfahren), wobei gleichzeitig mit dem Schallimpuls die x-Ablenkung der Anzeigeröhre startet und die Stärke des eintreffenden Echos eine y-Aussteuerung bewirkt, so daß die Abszisse der solcherart geschriebenen Zacke auf die Laufzeit und somit auf den Abstand der Reflexionsstelle vom Einschallort schließen läßt, und der Erzeugung eines B-Bildes zur flächenhaften Darstellung eines Schnittes durch den untersuchten Körper, wobei Reflexionsstellen auf der Fläche durch Helltastung hervorgehoben werden. Die Deutung des Bildes im letzteren Fall bleibt der Erfahrung des Beobachters vorbehalten.

Ziel jeder Produktkontrolle im Zuge der Fertigung sowie der Prüfung von im Betrieb befindlichen Bauteilen muß es sein, alle jene Informationen zur Verfügung zu stellen, die entweder als Kriterien für die Beurteilung des Lieferzustandes eines Produktes hinsichtlich eines vorgegebenen Annahmestandards bzw. für die Beurteilung der Eignung eines Bauteiles einer Maschine oder eine Anlage für seinen weiteren Gebrauch herangezogen werden. Während der sichere Nachweis und die Ortung von Werkstoffinnenfehlern die wesentlichen Vorzüge der Ultraschalltechnik darstellen und auch die Bestimmung von Fehlerabmessungen mit bestimmten verfahrenstechnischen Einschränkungen zufriedenstellend vorgenommen werden kann, bestanden die Schwächen der Ultraschallprüfung bisher in der qualitativen, d.h. fehlertypbezogenen Interpretation des natürlichen Fehlers. Die Aussage über den Fehlertyp erscheint unter dem Gesichtspunkt eines ständig steigenden Sicherheitsbedürfnisses und daraus resultierender verstärkter Prüftätigkeit sowohl bei Produktprüfungen im Zuge ihrer Herstellung als auch im besonderen Maße bei der in zeitlichen Abständen vorzunehmenden Überprüfung von in Betrieb stehenden hochbeanspruchten Bauteilen und Anlagen, wie z.B. Druckrohrleitungen, Brückentragwerke u.dgl., von wesentlicher Bedeutung.

Wenn es gelingt, den Fehlertyp mit entsprechender Sicherheit zu ermitteln, so werden damit einerseits die Möglichkeiten geschaffen, die Auswirkungen eines Fehlers auf eine Konstruktion besser abschätzbar zu machen, und anderseits kann in vielen Fällen, insbesondere bei der routinemäßigen periodischen Überprüfung von in Betrieb stehenden Anlagen, ein Hinweis darauf abgeleitet werden, wann bzw. unter welchen Umständen ein Fehler entstanden sein könnte.

Im einem aus der DE-PS 32 36 017 bekanntgewordenen Verfahren zum zerstörungsfreien Prüfen eines Werkstückes mittels Ultraschall entspreched dem ersten Teil des Anspruchs 1 wurde der Versuch unternommen, die Form eines im Werkstoff eingeschlossenen Fehlers mit hoher Auflösung sichtbar zu machen. Dies geschieht dadurch, daß mit Hilfe eines getakteten Arrays von zusammengebauten Ultraschallwandlern, wodurch die Abstrahlrichtung bzw. der Abstrahlwinkel der Ultraschallwandleranordnung zyklisch variiert werden kann, Ultraschallsignale in ein Werkstück abgestrahlt werden, deren Laufzeit zur Reflexionsstelle auf der Fehlerkontur einschließlich der dazugehörigen Amplitude erfaßt und gespeichert werden. In einem zweiten Speicher werden zu den möglichen Orten im Fehlererwartungsbereich die jeweilige Laufzeit und Amplitude derart gespeichert, daß nur die jeweils maximalen Werte in den Speicher geschrieben werden. Das Ergebnis wird auf einem Bildschirm in Form einer Intensitätsverteilung (Anhäufung von Punkten) dargestellt, wobei erkennbar ist, wo wesentliche Fehler und wo gegebenenfalls vernachlässigbare Fehler vorhanden sind. Bei Anwendung dieses bekannten Verfahrens kann eine Aussage darüber getroffen werden, wo sich im Werkstück eine Unstetigkeitsstelle befindet und welche geometrische Form der durch diese Unstetigkeitsstelle angezeigte Fehler auf Grund der gemessenen Reflexionspunkte aufweist. Über den Fehlertyp kann hierbei jedoch keine Aussage gemacht werden, weil jeglicher Zusammenhang mit der Herstellungstechnologie des Produktes fehlt.

Ein anderer Weg zum Klassifizieren von an geschweißten Platten auftretenden Fehlern ist in dem Artikel "Flaw Classification in Welded Plates Employing a Multidimensional Feature-based Decision Process" in der Zeitschrift Materials Evaluation, Vol. 42, Nr. 4, 1984, Seiten 433 bis 438, 443, aufgezeigt. Danach wird die Amplitude des Ultraschallechos bei kontinuierlicher Veränderung der Position der Ultraschallwandleranordnung oder bei kontinuierlicher Veränderung der Einschallrichtung aufgezeichnet oder es wird eine aus der Echoamplitude abgeleitete Größe in Abhängigkeit von einer dieser Variablen oder von der Laufzeit zwischen Ultraschallwandleranordnung und Reflexionsstelle aufgezeichnet. In Abhängigkeit von der Steilheit des Ansteigens und des Abfallens der Echoamplitude zu beiden Seiten einer Reflexionsstelle lassen sich gewisse Schlüsse auf die Arten der Fehler, wie Risse, Poren oder Schlackeneinschlüsse, ziehen. Zur Ermöglichung einer objektiven Auswertung der Meßdaten bei der Untersuchung einer Schweißnaht muß die geometrische Form der Schweißnaht bekannt sein, da sonst die Verarbeitung der Meßdaten unübersichtlich wird. So wird z.B. bei der Überprüfung einer X-Naht der Querschnitt der Schweißnaht in vier Zonen aufgeteilt, denen die verschiedenen Meßwerte zuzuordnen sind. Unter diesen Bedingungen konnten 75 % oder mehr der Fehler richtig erkannt werden. Mit Hilfe dieses bekannten Verfahrens kann somit innerhalb von Fehlererwartungsbereichen, deren Ausdehnung bereits von vorneherein bekannt sein muß, das Vorhandensein von Fehlern festgestellt werden und es lassen sich auch typische Fehler ihrer Art nach erkennen. Irgendeine Art einer graphischen Reproduktion zum Sichtbarmachen der Ausdehnung von Fehlerbereichen ist dabei nicht beabsichtigt.

In J.Appl.Phys.55(1), Januar 1984, Seiten 162-168 wird eine Graphik beschrieben, bei der Fehler-Reflexions- punkte "mit einer geschlossenen Linie" umschrieben werden und wobei die Winkellage/Orientierung dieser Linie bestimmt wird.

Die Erfindung zielt darauf ab, ein Verfahren zur Bestimmung der Fehlerarten in Werkstücken zu schaffen, bei welchem, gegebenenfalls nach Aufsuchen von Fehlererwartungsbereichen durch eine vorausgehende Handprüfung, eine Auswertung der festgestellten Fehlerstellen auf dem Wege über eine graphische Darstellung der Fehlerstelle vorgenommen wird, wobei die Ausdehnung und Lage der Fehlerstelle in einem ausgewählten Querschnitt erkennbar wird. Zur Lösung dieser Aufgabe besteht das erfindungsgemäße Verfahren im wesentlichen darin, daß nach Eingabe konstruktiver und schweißtechnischer Parameter sowie bauteilspezifischer Prüfbedingungen mittels eines Rechners eine Graphik entworfen wird, daß in dieser Graphikdarstellung wenigstens ein Bereich mit einer vorbestimmten Zahl von Reflexionspunkten mit einer geschlossenen Linie, insbesondere einer Kurve zweiter Ordnung, umschrieben wird, daß von der geschlossenen Linie die Winkellage einer Vorzugsachse, insbesondere der Hauptachse einer Ellipse, bezüglich eines Bezugsystems, bezeichnet als Orientierung, das Achsenverhältnis bzw. das Verhältnis von Länge zu Dicke des Fehlers und die Lage des Mittelpunktes berechnet werden, daß weiters ausgehend von der ermittelten Orientierung die Wegdifferenz zweier einander gegenüberliegender Reflexionspunkte einer Fehlerstelle erfaßt wird und aus der Verknüpfung von Achsenverhältnis, Wegdifferenz,Orientierung, Mittelpunktlage und projizierter Fehlerhöhe mit schweißtechnischen und konstruktiven Parametern sowie Berücksichtigung der Fehlerposition eine Unterscheidung zwischen den verschiedenen voluminösen Fehlern, den verschiedenen planaren Fehlern sowie den verschiedenen Kombinationen derselben herbeigeführt wird.

Durch gemeinsame Anwendung der vorstehend angeführten Maßnahmen gelingt es, nicht nur beispielsweise Risse von Lunkern oder Schlackeneinschlüssen unterscheiden zu können, sondern durch das Umschreiben einer Anhäufung von Reflexionspunkten mit einer geschlossenen Linie, im allgemeinen einer Ellipse, sind auch Ausdehnung, Lage und Orientierung einer Fehlerstelle in ihren wesentlichen Zügen auf einen Blick erkennbar.

Um die Fehlerstelle in möglichst ökonomischer Weise von verschiedenen Seiten mittels Ultraschall abzutasten, wird gemäß einer weiteren Ausgestaltung so vorgegangen, daß auf Grund der ermittelten Parameter der geschlossenen Linie, insbesondere der Winkellage der Hauptachse einer Ellipse, zwei weitere Positionen der Ultraschallwandleranordnung zur Ermittlung einer Wegdifferenz für die Dickenbestimmung des Fehlers festgelegt werden.

Zur Führung des Dialogs für die Unterscheidung zwischen den verschiedenen voluminösen Fehlern, den verschiedenen planaren Fehlern sowie den verschiedenen Kombinationen derselben werden zweckmäßig charakterisierende Parameter der Kurve zweiter Ordnung, wie Länge der Hauptachse, Länge der Nebenachse, Verhältnis dieser beiden Achsen zueinander, Neigung der Hauptachse zur Prüfoberfläche, Lage des Mittelpunktes zu einem definierten Koordinatensystem, Maximalabmessungen der in je eine senkrechte und parallel zur Prüfoberfläche verlaufende Ebene projizierten Figur zweiter Ordnung ermittelt.

Die Erfindung wird nachfolgend an Hand der Zeichnung näher erläutert. Es zeigt: Fig. 1 im Querschnitt eine zwei Blechplatten verbindende Schweißnaht mit verschiedenen aufeinanderfolgend anzuwendenden Einschallrichtungen für die Untersuchung mittels Ultraschall, Fig. 2 ein Flußdiagramm für den Ablauf der Untersuchung und Fig. 3 die Grundstruktur der Diagnose-Software.

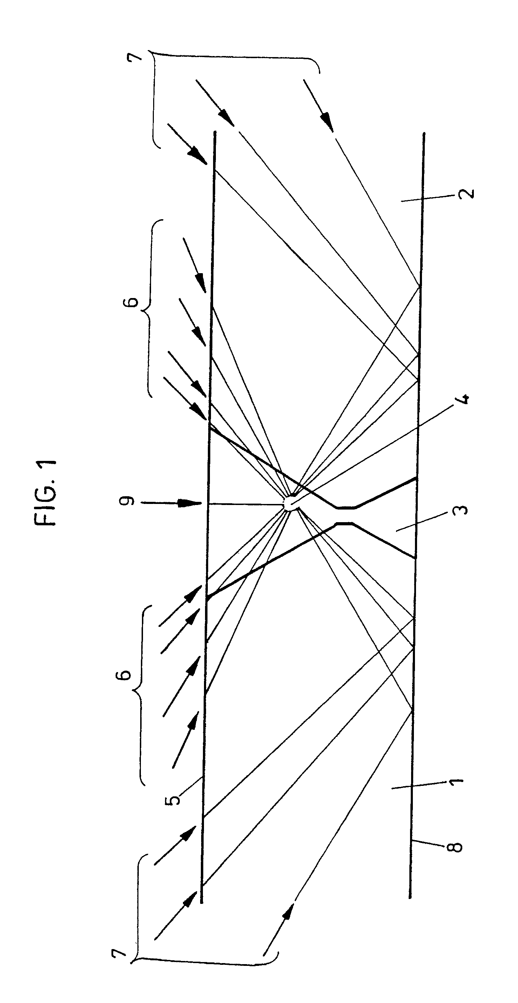

In Fig. 1 ist im Querschnitt die Verbindung zweier Blechplatten 1 und 2 durch eine X-Schweißnaht 3 dargestellt. In der Schweißnaht 3 befindet sich ein Fehlerbereich 4. Der Fehlerbereich 4 wird im oberen Halbraum von der Vorderseite 5 der Bleche her unter verschiedenen Richtungen 6 direkt beschallt sowie im unteren Halbraum ebenfalls von der Vorderseite 5 her unter verschiedenen Richtungen 7 nach Reflexion an der Rückseite 8 (halber Sprung) beschallt. Zusätzlich kann noch eine Einschallposition 9 für eine Einschallung normal zur Vorderseite 5 gewählt werden, wodurch der kleinste Abstand des Fehlerbereiches 4 von der Vorderseite 5 gemessen werden kann.

Die einzelnen "Schüsse" werden in einer Graphikdarstellung des Nahtquerschnittes auf einem Sichtgerät zur Information des Prüfers wiedergegeben. Neben einer Darstellung des Fehlers in einer Querschnittebene können je nach Bedarf mehrere solcher Querschnittebenen zu einer dreidimensionalen Darstellung des Fehlers zusammengeführt werden. Die Auswertung der einzelnen "Schüsse" bildet die Grundlage für die Ermittlung der Fehlerhauptorientierung in einem anschließenden Rechenverfahren. In der Graphikdarstellung erscheint die Gesamtheit aller Reflexionsstellen als Punktfeld, das dann mit einer geschlossenen Kurve zweiter Ordnung umschrieben wird, welche im allgemeinen eine Ellipse sein wird.

Bei der Untersuchung von Bauteilen und Anlagen muß die Eignung für die erstmalige Ingebrauchnahme oder für den weiteren Gebrauch beurteilt werden. Voraussetzung dafür ist ein möglichst hoher Informationsgehalt bei der Beschreibung des Fehlers hinsichtlich Typ, Orientierung und Form. Neben den Fehlerparametern müssen aber noch weitere spezifische Kriterien für die Beurteilung der Gebrauchseignung herangezogen werden. Hiezu gehören außer der Orientierung im Querschnitt auch die Lage im Querschnitt und der Ort des Fehlers am Bauteil sowie die Häufigkeit der Fehler. Zu den Entscheidungskriterien für die Gebrauchseignung gehören die Werkstoffkennwerte, die auftretende Beanspruchung, die Betriebsbedingungen und die zu berücksichtigenden Sicherheitsfaktoren. Auch Erfahrungswerte über das Betriebsverhalten spielen hier eine Rolle.

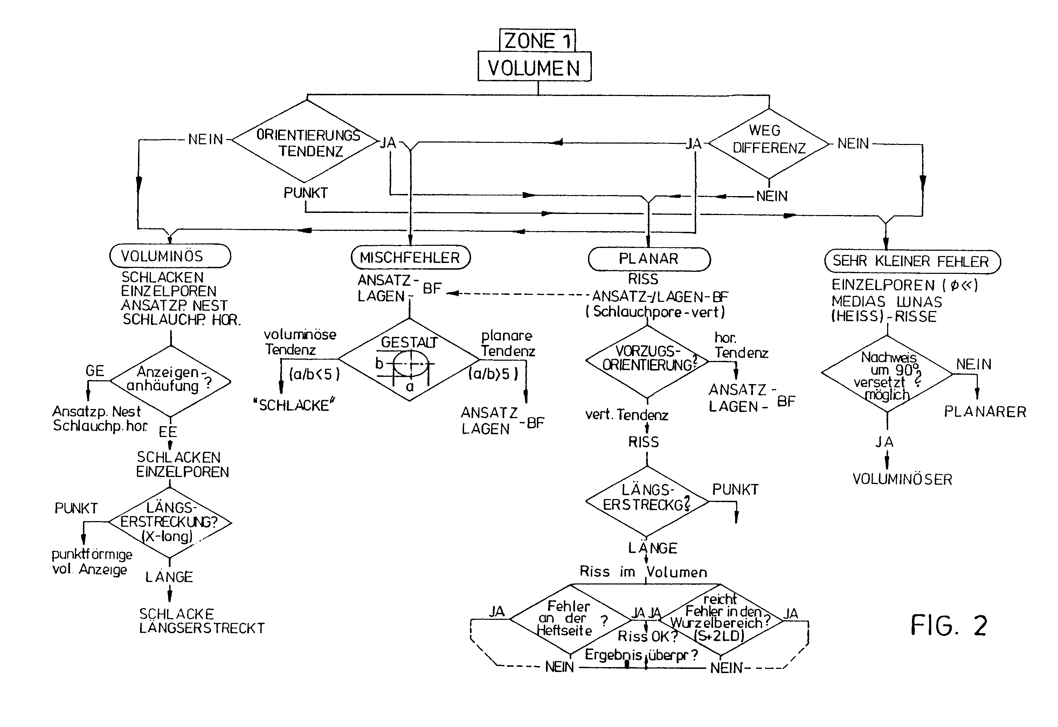

Fig. 2 zeigt ein Flußdiagramm, welches eine rechnerunterstützte Vorgangsweise ermöglicht. Je nach Bedarf können unterschiedlich viele Schritte ausgeführt werden. Beispielsweise ist es möglich, die Diagnose nur bis zur Unterscheidung von planaren und voluminösen Fehlern zu betreiben. Wenn aber eine weitere Differenzierung zwischen spezifischen Fehlertypen innerhalb einer dieser beiden Klassen angestrebt wird, können weitere Entscheidungsschritte angeschlossen werden. Dadurch ergibt sich für den praktischen Einsatz ein hohes Maß an Flexibilität bei der Anpassung an das jeweilige Prüfproblem.

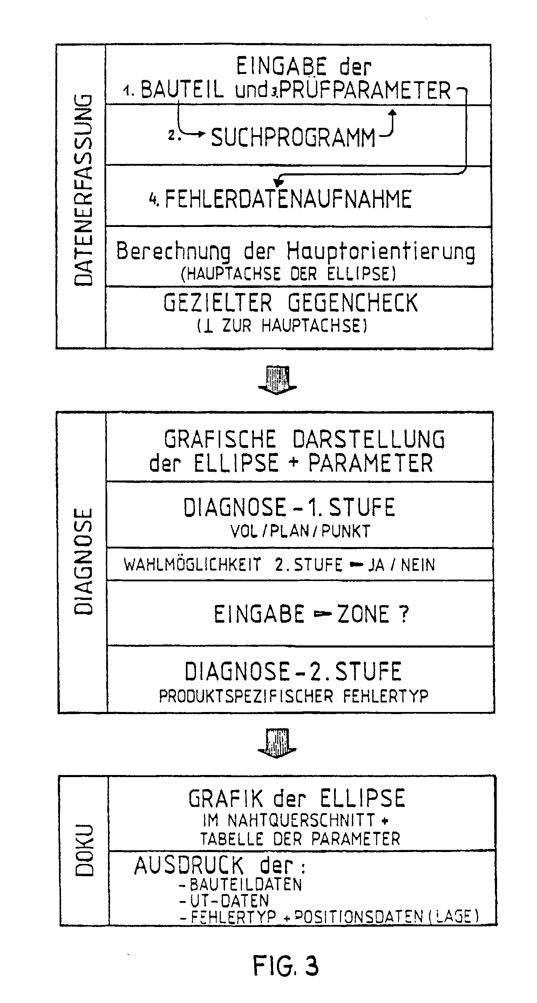

In der Praxis wird jeder systematischen Prüfung gemäß dem Flußdiagramm von Fig. 2 eine sogenannte Handprüfung vorausgehen. Das ist eine bekannte Standardprüfung mit einem Handprüfgerät unter Verwendung zweier oder mehrerer Winkelköpfe, meist mit Einschallrichtungen zwischen 35° und 70°, zur Orientierung darüber, ob und wo am und im Werkstück Fehler vorhanden sind und ob diese einer vorgegebenen Prüfspezifikation entsprechen oder nicht klar zu definieren sind, so daß eine systematische Untersuchung angeschlossen werden muß. Der Start der rechnerunterstützten Prüfung erfolgt mittels eines Such- und Informationsprogrammes, wodurch jene Fehler aufgesucht werden sollen, die mittels Handprüfung lokalisiert wurden, und eine Information darüber geliefert werden soll, wie der Fehler beschaffen ist. Durch diese Abfolge der Prüfschritte werden die Stärken von Mensch, wie Fachkenntnis und Erfahrung des Prüfers, und Maschine (Rechner) zur Erzielung einer verbesserten qualitativen Interpretation von Ultraschallprüfergebnissen kombiniert. Eine zweckmäßige Grundstruktur der Diagnose-Software hiefür ist in Fig. 3 dargestellt.

Das erfindungsgemäße Verfahren eignet sich besonders für Grenzfälle in der Beurteilung der Qualität bzw. Gebrauchseignung von Bauteilen und Anlagen. Seine Funktion ist darauf ausgelegt, den Prüfer in Form eines programmierten Dialogs bei der Entscheidungsfindung zu führen und alle dabei für ihn erforderlichen Informationen objektiv aufzubereiten. Die Entscheidung über die erforderlichen Eingaben im Dialog unterliegen nach wie vor der Kontrolle des Prüfers, orientiert an den Grundsätzen der manuellen Prüftechnik, so daß das Fachwissen und die Erfahrung des Prüfers voll zur Geltung gelangen.

## Patentansprüche

1.    Verfahren zur Bestimmung der Fehlerarten in Werkstücken (1, 2), insbesondere an und in Schweißnähten (3) von ebenen oder gekrümmten Bauteilen mit bekanntem Wanddickenverlauf, mittels Ultraschall, bei dem eine systematische Untersuchung des Werkstücks bzw. seiner, gegebenenfalls durch manuelle oder mechanisierte Vorprüfung voruntersuchten, Fehlererwartungsbereiche nach dem Ultraschall-Echobildverfahren in einzelnen Querschnittsebenen zur Erzeugung eines Querschnitts- oder B-Bildes vorgenommen wird, wobei die Position der Ultraschallwandleranordnung (6, 7, 9) auf dem Werkstück und bzw. oder die Einschallrichtung verändert werden und wobei für die Fehlerortung die Laufzeiten der möglichen Reflexionen berechnet werden, dadurch gekennzeichnet, daß nach Eingabe konstruktiver und schweißtechnischer Parameter sowie bauteilspezifischer Prüfbedingungen mittels eines Rechners eine Graphik entworfen wird, daß in dieser Graphikdarstellung wenigstens ein Bereich mit einer vorbestimmten Zahl von Reflexionspunkten mit einer geschlossenen Linie, insbesondere einer Kurve zweiter Ordnung, umschrieben wird, daß von der geschlossenen Linie die Winkellage einer Vorzugsachse, insbesondere der Hauptachse einer Ellipse, bezüglich eines Bezugssystems, bezeichnet als Orientierung, das Achsenverhältnis bzw. das Verhältnis von Länge zu Dicke des Fehlers und die Lage des Mittelpunktes berechnet werden, daß weiters ausgehend von der ermittelten Orientierung die Wegdifferenz zweier einander gegenüberliegender Reflexionspunkte einer Fehlerstelle erfaßt wird und aus der Verknüpfung von Achsenverhältnis, Wegdifferenz, Orientierung, Mittelpunktlage und projizierter Fehlerhöhe mit schweißtechnischen und konstruktiven Parametern sowie Berücksichtigung der Fehlerposition eine Unterscheidung zwischen den verschiedenen voluminösen Fehlern (4), den verschiedenen planaren Fehlern sowie den verschiedenen Kombinationen derselben herbeigeführt wird.

2. Verfahren nach Anspruch 1, dadurch gekennzeichnet, daß auf Grund der ermittelten Parameter der geschlossenen Linie, insbesondere der Winkellage die Hauptachse einer Ellipse, zwei weitere Positionen der Ultraschallwandleranordnung zur Ermittlung einer Wegdifferenz für die Dickenbestimmung des Fehlers (4) festgelegt werden.

3. Verfahren nach Anspruch 1 oder 2, dadurch gekennzeichnet, daß charakterisierende Parameter der Kurve zweiter Ordnung, wie Länge der Hauptachse, Länge der Nebenachse, Verhältnis dieser beiden Achsen zueinander, Neigung der Hauptachse zur Prüfoberfläche, Lage des Mittelpunktes zu einem definierten Koordinatensystem, Maximalabmessungen der in je eine senkrechte und parallel zur Prüfoberfläche verlaufende Ebene projizierten Figur zweiter Ordnung zur Führung des Dialogs für die Unterscheidung zwischen den verschiedenen voluminösen Fehlern, den verschiedenen planaren Fehlern sowie den verschiedenen Kombinationen derselben ermittelt werden.

## Claims

1. A method for the ultrasonic determination of the type of faults in work pieces (1, 2), particularly on and in welding beads (3) of plane and curved components of known wall thickness profile, In which Systematic testing is performed of the work piece or of its fault maintenance regions, which are tested previously by means of manual or mechanical prior checking if necessary, which method is effected according to the ultrasonic echo image method on individual cross-sections for the production of a cross-sectional or B-image, wherein the position of the ultrasonic transducer arrangement (6, 7, 9) on the work piece and/or the starting device are altered and wherein the transit times of the possible reflections for the location of faults are calculated, characterised in that a graphic display is plotted by a computer according to the Input of constructional and welding parameters and test conditions which are specific to the component, that his graphic display has at least one region which is transcribed with a predetermined number of reflection points forming a closed line, especially a second order curve, that the angular position of a preferred axis, particularly the major axis of an ellipse with respect to a reference System designated as the orientation, the axis ratio or the ratio of the length of the fault to the thickness of the fault, and the position of the mid-point are calculated, and that further the path difference of two overlapping reflection points from one fault location is recorded starting from the determined orientation, and that a differentiation between the different voluminous faults (4), the different planar faults and the different combinations thereof is brought about from the combination of axial ratio, path difference, orientation, position of' the mid-point and projected height of the fault with welding and constructional parameters, and with respect to the position of the fault.

2. A method according to Claim 1, characterised in that two further positions of the ultrasonic transducer arrangement are designated, based on the determined parameters of the closed line, particularly the angular position of the major axis of an ellipse, for the determination of a path difference for defining the thickness of the fault.

3. A method according to Claims 1 or 2, characterised in that characteristic parameters of the second order curve are determined, such as the length of the major axis, the length of the minor axis, the ratio between these two axes, the inclination of the major axis with respect to the test surface, the position of the mid-point with respect to a defined system of coordinates, and the maximum dimensions in each case of the second order figure projected on a plane which is vertical or parallel to the test surface, for conducting the dialogue for distinguishing between the different voluminous faults, the different planar faults and the different combinations of these.

## Revendications

1. Procédé destiné à déterminer, à l'aide d'ultra-sons, des types de défauts dans des pièces à usiner (1, 2), en particulier sur et dans des cordons de soudure de composants plans ou incurvés à tracé d'épaisseur de Paroi connu, dans lequel un examen systématique de la pièce à usiner ou de ses zones prévues de défaillances, éventuellement examinées au préalable par un examen préalable manuel ou mécanique. est réalisé selon le procédé de formation d'image par écho ultrasonique dans des plans individuels de coupe pour réaliser une image en coupe ou image B, la position du dispositif transducteur d'ultra-sons (6, 7, 9) sur la pièce à usiner et/ou le dispositif d'émission sonique pouvant être modifiés et les temps de parcours des réflexions possibles pouvant être calculés pour la détermination de l'emplacement des défauts, caractérisé en ce que, après l'introduction de paramètre de structure et de technique de soudure ainsi que de conditions d'essai spécifiques aux composants, il est réalisé au moyen d'un ordinateur un graphique, en ce que, dans cette représentation graphique, au moins une zone comportant un nombre prédéfini de points de réflexion est entourée par une ligne fermée, en particulier une courbe du deuxième degré, en ce qu'il est calculé, à partir de la ligne fermée, la position angulaire d'un axe préféré, en particulier le grand axe d'une ellipse, par rapport à un système de référence, défini comme orientation, le rapport des axes ou le rapport de la longueur à l'épaisseur du défaut et la position du point central, en ce qu'en outre, en partant de l'orientation déterminée, la différence de trajet de deux points de réflexion opposés entre eux d'un emplacement de défaut est saisie et qu'il est réalisé une différence entre les divers défauts volumineux (4), les différents défauts plans, ainsi que les diverses combinaisons de ceux-ci au moyen d'une combinaison du rapport des axes, de la différence des trajets, de l'orientation, de la position du point central et de la hauteur projetée de défaut avec des paramètres de technique de soudure et de structure, et en prenant en compte la position du défaut.

2. Procédé selon la revendication 1, caractérisé en ce que deux autres positions du dispositif de transducteur ultrasonique sont fixées pour déterminer une différence de trajet pour la définition d'épaisseur du défaut (4) sur la base des paramètres déterminés de la ligne fermée; en particulier de la position angulaire de l'axe principal d'une ellipse.

3. Procédé selon la revendication 1 ou 2, caractérisé en ce que les paramètres caractérisants de la courbe du deuxième degré, comme la longueur du grand axe, la longueur du petit axe, le rapport entre ces deux axes, l'inclinaison du grand axe par rapport à la surface d'analyse, la position du point central par rapport à un système défini de coordonnées, les dimensions maximales de la figure du deuxième degré projetée respectivement dans un plan de tracé perpendiculaire et parallèle à la surface d'examen, sont déterminés pour l'exécution du dialogue destiné à la différenciation entre les divers défauts volumineux, les divers défauts plans ainsi que les diverses combinaisons de ceux-ci.

# FIG. 1

EP 0 217 783 B1

FIG. 2

ZONE 1
VOLUMEN

ORIENTIERUNGS TENDENZ — NEIN / JA

WEG DIFFERENZ — NEIN

PUNKT

NEIN

VOLUMINÖS
SCHLACKEN
EINZELPOREN
ANSATZP. NEST
SCHLAUCHP. HOR.

MISCHFEHLER
ANSATZ-LAGEN- BF

PLANAR
RISS
ANSATZ-/LAGEN-BF
(Schlauchpore-vert)

SEHR KLEINER FEHLER
EINZELPOREN (ø≪)
MEDIAS LUNAS
(HEISS)-RISSE

GE

Anzeigen-anhäufung?

Ansatzp. Nest
Schlauchp.hor.   EE

SCHLACKEN
EINZELPOREN

PUNKT

LÄNGS-
ERSTRECKUNG?
(X-long)

punktförmige
vol. Anzeige

LÄNGE

SCHLACKE
LÄNGSERSTRECKT

voluminöse
Tendenz

(a/b<5)

"SCHLACKE"

GESTALT
b
a

planare
Tendenz

(a/b>5)

ANSATZ
LAGEN -BF

VORZUGS-
ORIENTIERUNG?

hor.
Tendenz

ANSATZ-
LAGEN- BF

vert. Tendenz

RISS

LÄNGS-
ERSTRECKG?

PUNKT

LÄNGE

Riss im Volumen

JA

Fehler
an der
Heftseite ?

JA JA

reicht
Fehler in den
Wurzelbereich?
(S+2LD)

JA

Riss OK?

Ergebnis überpr?

NEIN

NEIN

Nachweis
um 90°
versetzt
möglich

NEIN

PLANARER

JA

VOLUMINÖSER

EP 0 217 783 B1

FIG. 3